# FASCICULE DE BREVET EUROPEEN

(11) **EP 1 495 994 B1**
(45) Date de publication et mention de la délivrance du brevet: **31.05.2006**
(21) Numéro de dépôt: 04100894.7
(22) Date de dépôt: 05.03.2004
(51) Int. Cl.: B65F 3/00

(54) **Déchetterie mobile**
Mobile Müllsammeleinrichtung
Mobile refuse collecter

(30) Priorité: 09.07.2003 FR 0308380
(43) Date de publication de la demande: 12.01.2005
(73) Titulaire: SEPRA, 42720 LA BENISSON DIEU (FR)
(72) Inventeur: De Seroux, Aymar, 42640 Saint Romain la Motte (FR); N'Kounkou, Urbain, 91200 Athis-Mons (FR)
(74) Mandataire: Vuillermoz, Bruno

(56) Documents cités:
- EP-A- 0 964 369
- WO-A-97/25263
- FR-A- 2 706 791
- FR-A- 2 782 311

## Description

### Domaine technique

L'invention se rapporte au domaine de la collecte, notamment sélective, des déchets et/ou des matériaux valorisables. Elle vise plus particulièrement un dispositif mobile permettant de collecter des déchets puis de les transporter jusqu'à un centre de traitement. Ce dispositif peut comporter une pluralité containeurs afin de collecter des déchets de nature différentes.

### Art antérieur

De façon générale, les dispositifs mobiles pour réaliser la collecte, notamment sélective, des déchets, se composent uniquement d'une remorque, support de transport pour des containeurs.

On connaît ainsi, et tel que décrit dans le document WO 97/25263, un dispositif mobile conforme au préambule de la revendication 1, comportant une pluralité de containeurs articulés par rapport à une remorque.

Dans ce cas, pour déposer des déchets de nature différente, il est nécessaire de garer son véhicule à proximité de la remorque, puis de faire des allers-retours avec les déchets de nature différente à déposer jusqu'aux différents containeurs. Ainsi, lorsque la masse totale des déchets à déposer est importante, de telles manipulations peuvent se révéler longues et pénibles.

De plus, l'ouverture des containeurs étant généralement orientée vers le haut, il est nécessaire de soulever à une certaine hauteur pour disposer les déchets dans les containeurs.

On connaît également, et tel que décrit dans le document US 6 173 941, des dispositifs mobiles permettant de faciliter la maintenance de véhicules. En effet, le dispositif décrit dans ce document comporte des agencements pour soulever un véhicule et effectuer des opérations de maintenance. Il se compose d'une remorque pourvue de rampes d'accès orientées perpendiculairement par rapport à la direction d'avancement de la remorque et d'un moyen de préhension pour élever la position du véhicule à réparer ou à entretenir.

Un tel dispositif permet donc à un véhicule de se positionner en contre haut par rapport au niveau du sol. Cependant, dans ce cas, les véhicules circulent sur la remorque dans le sens de sa largeur.

### Exposé de l'invention

L'invention concerne donc un dispositif pour réaliser la collecte, notamment sélective des matériaux valorisables et/ou des déchets, destiné à coopérer avec des containeurs.

Elle se caractérise en ce que le dispositif est constitué par une remorque pourvue de rampes au niveau de ses extrémités avant et arrière, et en ce qu'il comporte des agencements s'étendant sur toute la longueur de cette remorque, de façon à permettre à un véhicule de se positionner en contre haut par rapport à des containeurs disposés de part et d'autre de la remorque dans le sens de sa longueur.

Autrement dit, ce dispositif mobile permet à un véhicule de monter sur une remorque par son extrémité avant ou arrière et de circuler sur la remorque dans le sens de la longueur, pouvant se positionner en contre haut par rapport à des containeurs disposés sur le sol.

Avantageusement, la montée du véhicule ainsi que la descente peuvent s'opérer dans le même sens de circulation. Autrement dit, les véhicules montent sur la remorque par l'intermédiaire d'une rampe disposée sur une extrémité avant ou arrière, puis redescendent de la remorque au niveau de l'extrémité opposée.

Cependant pour certaines applications particulières il est également possible d'effectuer la montée et la descente sur une même rampe mais dans des sens opposés, la descente s'effectuant alors en marche arrière par exemple.

En pratique, la remorque peut comporter sur sa face supérieure des agencements aptes à recevoir les containeurs et à les transporter. Ainsi, une fois la collecte des déchets effectuée, les containeurs peuvent être disposés sur la face supérieure de la remorque, puis transportés jusqu'à un centre de traitement des déchets.

De plus, le dispositif peut comporter des organes mécaniques de solidarisation des containeurs avec la face supérieure de la remorque. Les containeurs peuvent alors, par exemple, pivoter autour de l'une de leurs arêtes de la face supérieure de la remorque jusqu'à venir reposer sur le sol, et ce, au moyen d'actionneurs, notamment pneumatiques ou hydrauliques.

Lors du transport des containeurs sur la remorque, il est en outre nécessaire de positionner les rampes d'accès dans une position permettant la circulation de la remorque sur le réseau routier. Ainsi, selon une première variante, au moins une rampe peut être démontable de la structure de la remorque, de façon à être disposée dans un espace de rangement.

Selon une seconde variante, au moins une des rampes peut être apte à pivoter autour d'un axe de manière à positionner l'une de ses extrémités en contact avec le sol dans une position extrême, et à permettre à un véhicule de tracter la remorque dans l'autre position extrême.

Enfin, selon une autre variante, au moins une des rampes peut être apte à coulisser et à s'escamoter de manière à positionner l'une des ses extrémités en contact avec le sol dans une position extrême et à permettre à un véhicule de tracter la remorque dans l'autre position extrême.

Il peut également être avantageux d'équiper le dispositif de moyens de réglage permettant de modifier la hauteur de la face supérieure de la remorque. De cette manière, il est alors possible d'adapter la hauteur de la remorque, par exemple en fonction de la hauteur des containeurs.

Enfin, la remorque peut être dépourvue au niveau de son extrémité avant d'un essieu et peut reposer sur l'arrière d'un tracteur routier.

### Description sommaire des figures

La manière de réaliser l'invention ainsi que les avantages qui en découlent, ressortiront bien de la description du mode de réalisation qui suit, donné à titre indicatif et non limitatif, à l'appui des figures annexées dans lesquelles :
- la figure 1 est une vue en perspective du dispositif, conforme à l'invention ;
- la figure 2 est une vue de côté d'une première variante du dispositif, conforme à l'invention ;
- la figure 3 est une vue de derrière du dispositif conforme à l'invention;
- la figure 4 est une vue de profil d'une seconde variante du dispositif conforme à l'invention.

### Manière de réaliser l'invention

Comme déjà évoqué, l'invention concerne un dispositif mobile pour réaliser la collecte, notamment sélective des matériaux valorisables et autres déchets.

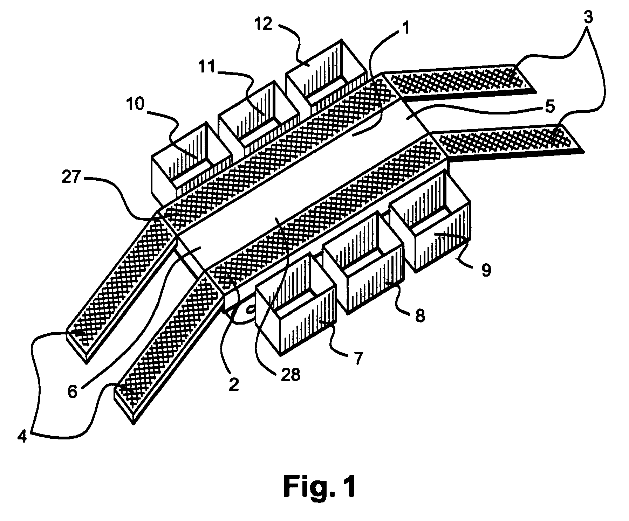

Selon l'invention, et tel que représenté en figure 1, le dispositif mobile (1) est constitué par une remorque (2) pourvue de rampes (3, 4) au niveau de ses extrémités avant (5) et arrière (6).

De plus, il comporte des agencements (27, 28) s'étendant sur toute la longueur de cette remorque (2), de façon à permettre à un véhicule de se positionner par rapport à des containeurs (7-12) disposés de part et d'autre de la remorque (2) dans le sens de sa longueur.

Lorsqu'un véhicule se présente donc devant l'une des rampes d'accès (3) ou (4), il ralentit puis gravit la dénivellation pour parvenir jusqu'à la face supérieure de la remorque (2), puis roule sur des agencements (27, 28) disposés longitudinalement sur la remorque (2). Le véhicule se trouve donc positionné en contre haut par rapport aux containeurs (7-12). L'usager du dispositif mobile (1) arrête alors son véhicule et peut procéder au dépôt de ses déchets dans les différents containeurs (7-12).

Une fois le dépôt des matériaux valorisables et autres déchets effectué, l'usager redémarre son véhicule et peut continuer sa progression en descendant, par exemple, du côté opposé par rapport auquel il est monté, et en empruntant l'autre rampe d'accès (3) ou (4).

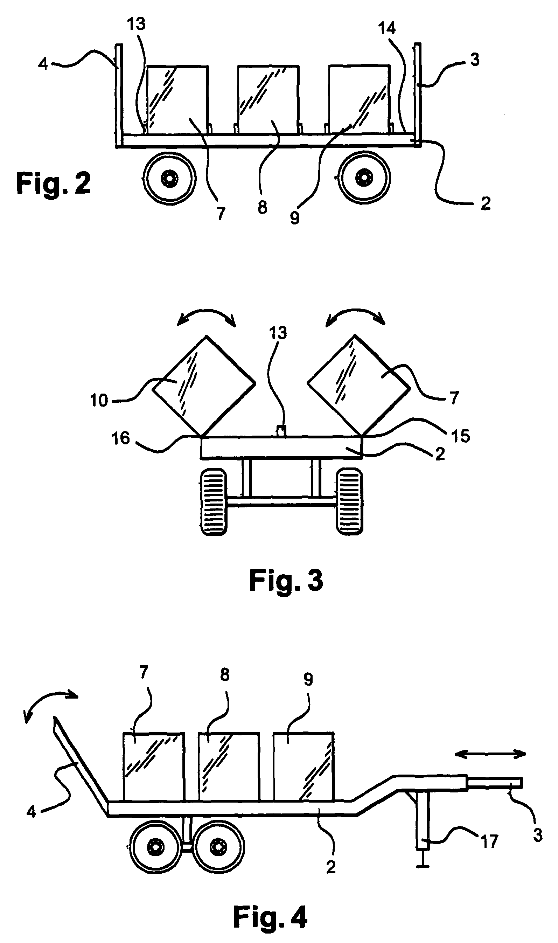

Pour permettre le transport des containeurs (7-12) sur la remorque (2), et tel que représenté en figure 2, la remorque (2) comporte des agencements (13) sur sa face supérieure (14). Ainsi, une fois la collecte des matériaux valorisables et autres déchets effectuée, les containeurs (7-12) sont alors disposés sur la face supérieure (14) de la remorque (2), puis transportés jusqu'à la station de traitement des déchets.

Pour permettre ce transport, il est également nécessaire que les rampes d'accès (3, 4) soient positionnées de façon à permettre à un véhicule de tracter la remorque (2). Telles qu'illustrées ici, les deux rampes (3, 4) sont ramenées à la verticale par pivotement autour d'un axe. De plus, afin de s'assurer que les containeurs soient solidaires de la remorque (2), il est prévu d'utiliser des organes mécaniques de solidarisation des containeurs (7-12) avec la face supérieure (14) de la remorque (2).

Tel que représenté en figure 3, les containeurs (7-12) peuvent être aptes à pivoter autour de l'une des leurs arêtes (15, 16) et à venir reposer sur le sol. De cette manière, les containeurs (7-12) sont constamment reliés à la remorque (2).

De plus, le mouvement de rotation des containeurs (7-12) autour de leur arête (15, 16) peut être effectué au moyen d'actionneurs non représenté ici, mais pouvant notamment être de technologie hydraulique ou pneumatique.

La remorque, telle que représentée en figure 4 comprend une rampe (4) qui est située à l'extrémité arrière (6) et qui pivote autour d'un axe par rapport à la remorque (2). Elle comporte également une rampe (3, 5) qui coulisse à l'intérieur de la remorque (2) de façon à s'escamoter.

Dans cette variante, la remorque utilisée est une semi-remorque, c'est-à-dire qu'elle ne présente pas d'essieu au niveau de son extrémité avant (5). De cette manière, elle est apte à être tractée par un tracteur routier.

Avantageusement, la face supérieure de la remorque est munie de deux pesons (non représentés), respectivement situés aux deux extrémités de ladite face, et propres à mesurer la masse du véhicule de l'utilisateur avant et après dépôt des matériaux valorisables et autres déchets au niveau des containeurs (7 - 12). De la sorte, il devient possible de déterminer la quantité en poids des matériaux déposés dans lesdits containeurs, et permettre à l'exploitant de la déchetterie mobile de calculer le prix correspondant à acquitter.

Il ressort de ce qu'il précède qu'un dispositif conforme à l'invention présente de multiples avantages, notamment :
- il permet de générer une déchetterie qui est à la fois mobile et rapide à mettre en place ;
- il permet de positionner un véhicule en contre haut par rapport à l'ouverture des containeurs et donc de réduire les efforts nécessaires pour déposés des matériaux valorisables et autres déchets dans des containeurs ;
- la proximité des différents containeurs autour de l'usager, rend ce dispositif très ergonomique puisqu'il permet de réduire les allers-retours entre le véhicule et les différentes zones de déversement des déchets.

## Revendications

1. Dispositif mobile (1) pour réaliser la collecte, notamment sélective de matériaux valorisables et autres déchets, destiné à coopérer avec des containeurs (7 - 12), **caractérisé en ce qu'**il est constitué par une remorque (2) pourvue de rampes (3, 4) au niveau de ses extrémités avant (5) et arrière (6), et **en ce qu'**il comporte des agencements (27, 28) s'étendant sur toute la longueur de ladite remorque (2) de façon à permettre à un véhicule de se positionner en contre haut par rapport auxdits containeurs (7-12) disposés de part et d'autre de la remorque (2) dans le sens de sa longueur.

2. Dispositif selon la revendication 1, **caractérisé en ce que** la montée du véhicule sur la remorque (2), de même que la descente de celui-ci, s'opèrent dans le même sens de circulation.

3. Dispositif selon la revendication 1, **caractérisé en ce que** la remorque (2) comporte des agencements (13) sur sa face supérieure (14) aptes à recevoir les containeurs (7-12) et à les transporter.

4. Dispositif selon la revendication 3, ***caractérisé* en ce qu'**il comporte des organes mécaniques de solidarisation des containeurs (7-12) avec la face supérieure (14) de la remorque (2).

5. Dispositif selon la revendication 4, ***caractérisé* en ce qu'**il comporte des actionneurs aptes à faire pivoter les containeurs (7-12) autour de l'une de leurs arêtes (15, 16) à partir de la face supérieure (14) de la remorque (2) jusqu'au sol.

6. Dispositif selon la revendication 1, **caractérisé en ce qu'**au moins l'une des rampes (3, 4) est démontable.

7. Dispositif selon la revendication 1, **caractérisé en ce qu'**au moins l'une des rampes (3, 4) est apte à pivoter autour d'un axe de manière à positionner l'une de ses extrémités en contact avec le sol dans une position extrême et à permettre à un véhicule de tracter la remorque (2) dans l'autre position extrême.

8. Dispositif selon la revendication 1, **caractérisé en ce qu'**au moins l'une des rampes (3, 4) est apte à coulisser et à s'escamoter de manière à positionner l'une de ses extrémités en contact avec le sol dans une position extrême et à permettre à un véhicule de tracter la remorque (2) dans l'autre position extrême.

9. Dispositif selon la revendication 1, **caractérisé en ce qu'**il comporte des moyens de réglage (17) pour modifier la hauteur de la face supérieure (14) de la remorque (2).

10. Dispositif selon la revendication 1, **caractérisé en ce que** la remorque (2) est dépourvue d'essieu au niveau de son extrémité avant (5).

11. Dispositif selon l'une des revendications 1 à 10, ***caractérisé* en ce que** la face supérieure (14) de la remorque (2) est munie de deux pesons, destinés à mesurer la masse du véhicule de l'utilisateur avant et après dépôt des matériaux valorisables et autres déchets au niveau des containeurs (7-12).

## Claims

1. A mobile device (1) for collecting, especially separately, recoverable materials and other wastes which is intended to cooperate with containers (7-12), ***characterised* in that** it consists of a trailer (2) equipped with ramps (3, 4) on its front (5) and rear (6) ends and **in that** it comprises features (27, 28) extending over the entire length of said trailer (2) so as to enable a vehicle to position above said containers (7-12) arranged either side of the trailer (2) in its lengthwise direction.

2. A device as claimed in claim 1, ***characterised* in that** the vehicle drives up onto trailer (2) and drives down from the latter in the same direction of travel.

3. A device as claimed in claim 1, ***characterised* in that** trailer (2) comprises features (13) on its upper surface (14) capable of accommodating containers (7-12) and transporting them.

4. A device as claimed in claim 3, ***characterised* in that** it comprises mechanical units to attach containers (7-12) to the upper surface (14) of trailer (2).

5. A device as claimed in claim 4, ***characterised* in that** it comprises actuators capable of swivelling the containers (7-12) around one of their edges (15, 16) on the upper surface (14) of the trailer (2) down onto the ground.

6. A device as claimed in claim 1, ***characterised* in that** at least one of the ramps (3, 4) can be disassembled.

7. A device as claimed in claim 1, ***characterised* in that** at least one of the ramps (3, 4) is capable of swivelling around an axis so as to bring one of its ends into contact with the ground in an extreme position and enable a vehicle to tow the trailer (2) in its other extreme position.

8. A device as claimed in claim 1, ***characterised* in that** at least one of the ramps (3, 4) is capable of sliding and retracting so as to bring one of its ends into contact with the ground in an extreme position and enable a vehicle to tow the trailer (2) in the other extreme position.

9. A device as claimed in claim 1, ***characterised* in that** it comprises means of adjustment (17) in order to modify the height of the upper surface (14) of the trailer (2).

10. A device as claimed in claim 1, ***characterised* in that** trailer (2) has no axle at its front end (5).

11. A device as claimed in any of claims 1 to 10, ***characterised* in that** the upper surface (14) of the trailer (2) is equipped with two scales intended to measure the mass of the user's vehicle before and after depositing materials that can be recovered and other wastes into containers (7-12).

## Patentansprüche

1. Mobile Vorrichtung (1) zur Durchführung der, insbesondere selektiven, Sammlung von Wertstoffen und anderen Abfällen, bestimmt zum Zusammenwirken mit Containern (7-12), **dadurch gekennzeichnet, daß** sie von einem Anhänger (2) gebildet wird, der mit Rampen (3,4) im Bereich seines vorderen (5) und seines hinteren (6) Endes versehen ist, und daß sie Anordnungen (27,28) aufweist, die sich über die gesamte Länge des genannten Anhängers (2) erstrecken, so daß sie es einem Fahrzeug erlauben, sich oberhalb der genannten Container (7-12) zu positionieren, welche zu beiden Seiten des Anhängers (2) in seiner Längsrichtung angeordnet sind.

2. Vorrichtung nach Anspruch 1, **dadurch gekennzeichnet, daß** das Auffahren des Fahrzeugs auf den Anhänger (2) sowie dessen Herunterfahren in der gleichen Fahrtrichtung erfolgt.

3. Vorrichtung nach Anspruch 1, **dadurch gekennzeichnet, daß** der Anhänger (2) Anordnungen (13) auf seiner Oberseite (14) aufweist, die dazu geeignet sind, die Container (7-12) aufzunehmen und zu transportieren.

4. Vorrichtung nach Anspruch 3, **dadurch gekennzeichnet, daß** sie mechanische Mittel zur Befestigung der Container (7-12) an der Oberseite (14) des Anhängers (2) aufweist.

5. Vorrichtung nach Anspruch 4, **dadurch gekennzeichnet, daß** sie Betätigungsmittel aufweist, die dazu geeignet sind, die Container (7-12) um eine ihrer Kanten (15,16) ausgehend von der Oberseite (14) des Anhängers (2) bis zum Boden kippen zu lassen.

6. Vorrichtung nach Anspruch 1, **dadurch gekennzeichnet, daß** mindestens eine der Rampen (3,4) demontierbar ist.

7. Vorrichtung nach Anspruch 1, **dadurch gekennzeichnet, daß** mindestens eine der Rampen (3,4) dazu geeignet ist, um eine Achse derart zu verschwenken, daß in einer Endposition eines ihrer Enden in Kontakt mit dem Boden positioniert ist, und einem Fahrzeug das Ziehen des Anhängers (2) in der anderen Endposition ermöglicht wird.

8. Vorrichtung nach Anspruch 1, **dadurch gekennzeichnet, daß** mindestens eine der Rampen (3,4) dazu geeignet ist, zu gleiten und derart eingezogen zu werden, daß in einer Endposition eines ihrer Enden in Kontakt mit dem Boden positioniert ist und in der anderen Endposition einem Fahrzeug das Ziehen des Anhängers (2) ermöglicht wird.

9. Vorrichtung nach Anspruch 1, **dadurch gekennzeichnet, daß** sie Stellmittel (17) zum Verändern der Höhe der Oberseite (14) des Anhängers (2) aufweist.

10. Vorrichtung nach Anspruch 1, **dadurch gekennzeichnet, daß** der Anhänger (2) keine Achse im Bereich seines Vorderendes (5) aufweist.

11. Vorrichtung nach einem der Ansprüche 1 bis 10, **dadurch gekennzeichnet, daß** die Oberseite (14) des Anhängers (2) mit zwei Waagen versehen ist, die dazu bestimmt sind, die Masse des Fahrzeugs des Benutzers vor und nach dem Deponieren der Wertstoffe und der anderen Abfallstoffe im Bereich der Container (7-12) zu messen.
